# EUROPÄISCHE PATENTANMELDUNG

(11) **EP 1 522 438 A1**
(43) Veröffentlichungstag der Anmeldung: **13.04.2005**
(21) Anmeldenummer: 04021693.9
(22) Anmeldetag: 13.09.2004
(51) Int. Cl.: B60H 1/00, B60H 1/03, B60H 1/32

(54) **Regelung der Lufttemperatur einer Kfz-Klimaanlage mit Zuheizfunktion**

(30) Priorität: 06.10.2003 DE 10346827
(71) Anmelder: Behr GmbH & Co. KG, 70469 Stuttgart (DE)
(72) Erfinder: Baruschke, Wilhelm, Dipl.-Ing., 73117 Wangen (DE); Lochmahr, Karl, Dipl.-Ing. (FH), 71665 Vaihingen (DE); Pitz, Eric, 70199 Stuttgart (DE)
(74) Vertreter: Grauel, Andreas, Dr.

(57) **Zusammenfassung**

Die Erfindung betrifft ein Verfahren zur Regelung der Lufttemperatur einer Kraftfahrzeug-Klimaanlage mit Zuheizfunktion, wobei ein Zuheiz-Wärmeübertrager (3) in einem Luftkanal (1) in Luftströmungsrichtung stromaufwärts von einem als Kühlmittel/Luftwärmeübertrager ausgebildeten Heizkörper (5) angeordnet und dem Heizkörper (5) eine Temperaturmischklappe (7) sowie ein Bypasskanal (6) zugeordnet sind, und wobei zu klimatisierende und/oder zu erwärmende Luft mittels eines Gebläses (2) durch den Luftkanal (1) gefördert wird.

Es wird vorgeschlagen, dass die Position der Temperaturmischklappe (7) in Abhängigkeit von der Zuheizfunktion (ein oder aus) geregelt wird, wobei bei zugeschalteter Zuheizfunktion die Temperaturmischklappe (7) eine Luftströmung durch den Heizkörper (5) unterbindet und bei abgeschalteter Zuheizfunktion freigibt.

## Beschreibung

Die Erfindung betrifft ein Verfahren zur Regelung der Lufttemperatur einer Kfz-Klimaanlage mit Zuheizfunktion nach dem Oberbegriff des Patentanspruches 1; die Erfindung betrifft auch eine Vorrichtung zur Durchführung des Verfahrens zur Regelung der Lufttemperatur nach dem Oberbegriff des Patentanspruches 5.

Kraftfahrzeuge mit verbrauchsoptimierten Motoren, u. a. Dieselmotoren mit hohem thermischen Wirkungsgrad und geringer Abwärme benötigen eine Zuheizfunktion, d. h. eine zusätzliche Heizung während der Warmlaufphase des Verbrennungsmotors. Für derartige Zuheizfunktionen, Zusatzheizungen oder auch kurz Zuheizer benannt, gibt es diverse Vorschläge, z. B. elektrische Zusatzheizungen mit PTC-Elementen, wie sie z. B. durch die DE 199 11 547 C2, die DE 199 57 452 A1 oder die EP 707 434 B1 bekannt wurden. Die PTC-Elemente sind dabei entweder in den Heizkörper integriert oder in einem Heizregister zusammengefasst, welches hinter dem Heizkörper, d. h. in Luftströmungsrichtung stromabwärts angeordnet ist. Andere Zusatzheizungen wurden als so genannte Visko-Heizungen bekannt, z. B. durch die EP 361 053 B1, bei welcher mechanische Energie des Motors durch Flüssigkeitsreibung in Wärme umgesetzt wird, die zur Erwärmung des Kühlmittels benutzt wird, welches einen Heizkörper zur Beheizung des Fahrgastraumes durchströmt. Durch die EP 462 154 B1 wurde eine Brennstoff-Zusatzheizung bekannt, welche einen Kühlmittel/Luft-Wärmeübertrager als Heizkörper aufweist, der mit von einem Brenner erwärmten Kühlmittel versorgt wird. Bekannt sind auch kraftstoffbetriebene Luftheizgeräte (luftseitige Zuheizer), bei welchen die Kabinenluft (für den Fahrgastraum) direkt von den heißen Brenngasen beheizt wird. Diese Luftzuheizer zeichnen sich gegenüber den Wasserzuheizem durch eine höhere Dynamik aus, d. h. die Kabinenluft wird wesentlich schneller erwärmt.

Femer wurden "heizende" Klimaanlagen bekannt, welche auch im Wärmepumpenbetrieb, also mit umgekehrter Prozessrichtung betrieben werden und einen Zuheiz-Wärmeübertrager aufweisen. Durch die DE 100 36 038 A1 der Anmelderin wurde eine solche Klimaanlage zum Kühlen und Heizen bekannt, bei welcher ein zusätzlicher Wärmeübertrager im Kältemittelkreislauf vorgesehen ist, der im Wärmepumpenbetrieb der Klimaanlage als Zuheizer arbeitet.

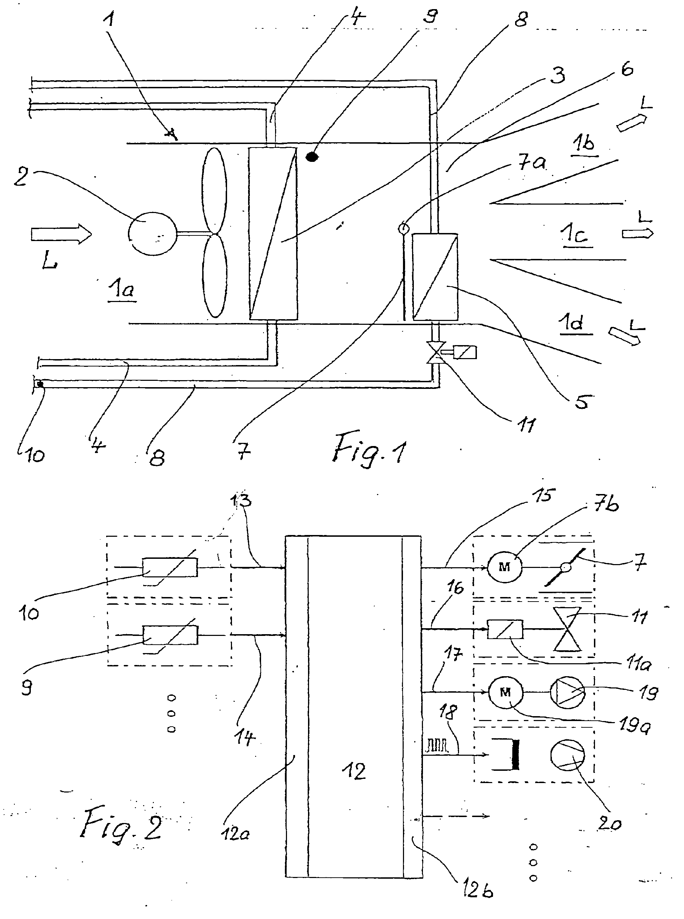

Durch die DE 100 06 513 A1 der Anmelderin wurde eine Klimaanlage bekannt, die in einer Klimatisierungs- und in einer Wärmepumpen-Betriebsart arbeitet und einen Wärmeübertrager aufweist, der während der Klimatisierung, also beim Kühlen als Verdampfer und im Wärmepumpenbetrieb, also beim Heizen als Zuheiz-Wärmeübertrager oder Zuheizer eingesetzt wird. Somit übemimmt der Verdampfer der Klimaanlage zusätzlich die Funktion eines Zuheizers. Dieser Zuheizer ist (vgl. Fig. 2) in Luftströmungsrichtung vor dem Heizkörper der Klimaanlage, welcher von Kühlmittel eines Kühlmittelkreislaufes durchströmt wird, angeordnet. Der Heizkörper ist luftseitig geregelt, d. h. er wird durch eine Temperaturmischklappe kontrolliert. Die Erfindung geht von diesem Stand der Technik aus.

Der Erfindung liegt die Aufgabe zugrunde, ein Verfahren zur Regelung der Lufttemperatur einer Klimaanlage sowohl mit luftseitig als auch mit wasserseitig geregelter Heizung und mit Zuheizfunktion anzugeben, bei welchem die Zuheizfunktion und die standardmäßige Heizfunktion miteinander koordiniert werden, und insbesondere der Übergang vom Zuheizen auf Heizen geregelt wird. Femer ist es Aufgabe der Erfindung, eine geeignete Vorrichtung zur Durchführung des erfindungsgemäßen Verfahrens bereit zu stellen.

Diese Aufgabe wird durch die Merkmale des Patentanspruches 1 gelöst. Erfindungsgemäß ist für eine luftseitig geregelte Heizung vorgesehen, dass die Temperaturmischklappe des Heizkörpers in Abhängigkeit von ein- oder ausgeschalteter Zuheizfunktion geregelt wird. Damit wird der Vorteil erreicht, dass während eingeschalteter Zuheizfunktion der Heizkörper durch die Temperaturmischklappe abgedeckt ist und kein Wärmeeintrag von dem Zuheiz-Wärmeübertrager (Zuheizer) auf den Heizkörper und damit in das den Heizkörper durchströmende Kühlmittel erfolgt. Somit kommt die vom Zuheizer abgegebene Wärme in vollem Umfang der Beheizung des Fahrgastraumes zugute. Damit ergibt sich eine relativ schnelle Aufheizung des Fahrzeuginnenraumes. Sobald die Zuheizfunktion abgeschaltet ist, tritt die Temperaturmischklappe wieder in Funktion.

Die Aufgabe der Erfindung wird auch durch die Merkmale des nebengeordneten Patentanspruches 2 gelöst, und zwar für eine wassergeregelte Heizung, indem das Heizungsventil analog zur Temperaturmischklappe der luftgeregelten Heizung angesteuert wird.

Nach einer vorteilhaften Ausgestaltung der Erfindung wird der Kühlmittelstrom durch den Heizkörper solange unterbunden, wie der Zuheizer zugeschaltet ist, d. h. Wärme an die Luft abgibt. Auch damit wird der Vorteil erreicht, dass kein Wärmeeintrag vom Zuheizer auf das Kühlmittel bzw. in den Kühlmittelkreislauf erfolgt und die Zuheizwärme nur zu Heizzwecken des Fahrgastraumes genutzt wird.

Nach einer weiteren vorteilhaften Ausgestaltung der Erfindung bleibt der Zuheizer solange (bei voller Leistung) zugeschaltet, bis die nacheilende Kühlmitteltemperatur die Zuheiztemperatur, das ist die hinter dem Zuheizer von einem Fühler gemessene Lufttemperatur, erreicht hat. Der Kühlmittelstrom ist dann aufgrund seiner Temperatur in der Lage, mindestens ebensoviel Wärme über den Standardheizkörper an die in den Fahrzeuginnenraum strömende Luft abzugeben. Damit erfolgt ein Übergang vom Zuheizen zum standardmäßigen Heizen etwa auf gleichem Temperatumiveau, d. h. ohne Temperaturabsenkung oder Temperaturanhebung.

Nach einer weiteren vorteilhaften Ausgestaltung der Erfindung wird der Zeitpunkt der Umschaltung vom Zuheizen auf Heizen abhängig gemacht von der Temperaturdifferenz zwischen Zuheiztemperatur und Kühlmitteltemperatur, d. h. wenn diese Temperaturdifferenz gegen Null geht. Die Zuheiztemperatur steigt stärker als die Kühlmitteltemperatur an, eilt dieser also vor. Wenn die Kühlmitteltemperatur die Zuheiztemperatur erreicht hat, wird die Zuheizfunktion abgeschaltet bzw. zurückgeregelt.

Die Aufgabe der Erfindung wird auch durch die Merkmale der nebengeordneten Patentansprüche 6 und 7 gelöst, wonach zwei geeignete Vorrichtungen zur Durchführung des Verfahrens bereitgestellt werden. Erfindungsgemäß ist als erste Vorrichtung eine kühlende und heizende Klimaanlage vorgesehen, bei welcher ein und derselbe Wärmeübertrager sowohl als Verdampfer (zum Kühlen) als auch als Zuheiz-Wärmeübertrager (zum Heizen) verwendet wird. Um die Zuheizfunktion auszuüben, wird diese Klimaanlage als Wärmepumpe, d. h. mit umgekehrter Prozessrichtung betrieben. Als Vorteil ergibt sich, dass kein zusätzlicher Wärmeübertrager als Zuheiz-Wärmeübertrager benötigt wird, was weitere Vorteile hinsichtlich des benötigten Bauraumes und des luftseitigen Druckabfalles mit sich bringt.

Als alternativer Zuheizer (zweite Vorrichtung) ist eine motorunabhängige luftseitige Brennstoffheizung vorgesehen, welche nahe der Spritzwand (des Motorraumes), d. h. stromaufwärts vom Standardheizkörper angeordnet ist. Bei diesem Luftzuheizer wird die zu erwärmende Luft direkt von den Brenngasen beheizt, was den Vorteil einer hohen Dynamik hat, d. h. die Luft wird relativ schnell aufgeheizt. Das Verfahren zur vorteilhaften Koordination von Brennstoffzuheiz- und Standardheizfunktion ist analog dem zuvor beschriebenen Verfahren anwendbar.

Ein Ausführungsbeispiel der Erfindung ist in der Zeichnung dargestellt und wird im Folgenden näher beschrieben. Es zeigen
- Fig. 1: einen Ausschnitt, d. h. einen Luftkanal einer Klimaanlage mit einem Zuheizer und einer luftseitig geregelten Heizung,
- Fig. 2: ein Blockschaltbild mit Eingangs- und Ausgangssignalen zur Regelung der Lufttemperatur,
- Fig. 3: ein Diagramm mit Übergangsmodus der Zuheiz- auf die Standard-Heizfunktion und
- Fig. 4: einen Luftkanal mit einer wasserseitig geregelten Heizung und einem Zuheizer.

**Fig. 1** zeigt einen Luftkanal 1 einer nicht vollständig dargestellten Klimaanlage für ein Kraftfahrzeug. Der Luftkanal 1 weist einen Lufteintritt 1 a und einen Luftaustritt mit drei Luftauslässen 1 b, 1 c, 1 d auf, welche in verschiedene Richtungen in den nicht dargestellten Fahrzeuginnenraum weisen. Die Strömungsrichtung der Luft ist durch Pfeile L angedeutet. Im Luftkanal 1 ist ein Gebläse 2 zur Luftförderung angedeutet. In Luftströmungsrichtung hinter dem Gebläse 2 ist im Luftkanal 1 ein von Luft durchströmbarer Zuheiz-Wärmeübertrager 3, ein so genannter Zuheizer angeordnet, welcher an einen nicht vollständig dargestellten Kältemittelkreislauf 4 der Klimaanlage angeschlossen ist. Die hier nicht dargestellte Klimaanlage entspricht der Klimaanlage, wie sie in der eingangs genannten DE 100 06 513 A1 der Anmelderin beschrieben ist, insbesondere bezüglich der Wärmepumpenbetriebsart gemäß Fig. 2. Diese Druckschrift wird daher in vollem Umfang mit in den Offenbarungsgehalt dieser Anmeldung einbezogen. Somit fungiert der Wärmeübertrager 3 sowohl als Verdampfer ― beim Klimatisierungsbetrieb ― als auch als Zu heizer ― beim Wärmepumpen- bzw. Heizbetrieb.

Stromabwärts des Zuheizers 3 ist ein Heizkörper 5 angeordnet, der nicht den vollen Querschnitt des Luftkanals 1 ausfüllt, sondern einen Bypasskanal 6 freilässt. Stromaufwärts vom Heizkörper 5 ist eine Temperaturmischklappe 7, schwenkbar um eine Achse 7a, angeordnet, welche in der dargestellten Position den Heizkörper 5 vollständig abdeckt. Die Funktion der Temperaturmischklappe 7 ist eine an sich bekannte Lufttemperaturregelung, eine so genannte luftseitige Regelung, bei welcher die gewünschte Lufttemperatur durch Mischen von Warm- und Kaltluftströmen erreicht wird. Der Heizkörper 5 ist an einen nicht vollständig dargestellten Kühlmittelkreislauf 8 angeschlossen, d. h. der Heizkörper 5 wird vom Kühlmittel durchströmt, welches auch die nicht dargestellte Brennkraftmaschine kühlt. Stromabwärts vom Zuheizer 3 oder direkt am Zuheizer 3 ist ein (Luft-)Temperaturfühler 9 angeordnet, der die so genannte Zuheiztemperatur T_ZU misst. Im Kühlmittelkreislauf (Heizkörperzulauf) 8 ist ein Temperaturfühler 10 angeordnet, welcher die Temperatur des Kühlmittels T_KM misst. Femer ist im Kühlmittelkreislauf 8 am Heizkörper 5 ein so genanntes Sommerabsperrventil 11 angeordnet, durch welches der Kühlmittelstrom zum oder vom Heizkörper 5 völlig unterbunden werden kann.

**Fig. 2** zeigt ein Blockschaltbild mit einem als Rechteck dargestellten Klimasteuergerät 12, welches auf seiner (in der Zeichnung) linken Seite 12a Eingangssignale, dargestellt durch Pfeile 13, 14, empfängt und auf seiner rechten Seite 12b Ausgangssignale, dargestellt durch die Pfeile 15, 16, 17, 18, abgibt. Das Eingangssignal 13 ist die mittels Temperaturfühler 10 (Fig. 1) gemessene Kühlmitteltemperatur T_KM, und das Eingangssignal 14 ist die mittels Temperaturfühler 9 (Fig. 1) gemessene Zuheiztemperatur T_ZU, d. h. die unmittelbar hinter dem Zuheizer gemessene Lufttemperatur. Das Ausgangssignal 15 ist ein Signal an die Temperaturmischklappe 7 (Fig. 1), welche durch einen Stellmotor 7b verstellt wird. Das Ausgangssignal 16 geht an das Sommerabsperrventil 11 (Fig. 1), welches beispielsweise als Magnetventil 11 a ausgebildet ist. Das Ausgangssignal 17 betrifft eine etwa vorhandene Zusatz-Heizwasserpumpe 19, die von einem Motor 19a angetrieben wird und gegebenenfalls im Kühlmittel- bzw. im Heizkreislauf angeordnet ist. Das Ausgangssignal 18 steuert per PWM (Pulsweitenmodulation) das Regelventil eines Klimakompressors 20 zur Darstellung der Wärmepumpenregelung. Weitere Eingangs- und Ausgangssignale sind möglich, jedoch der Einfachheit halber weggelassen.

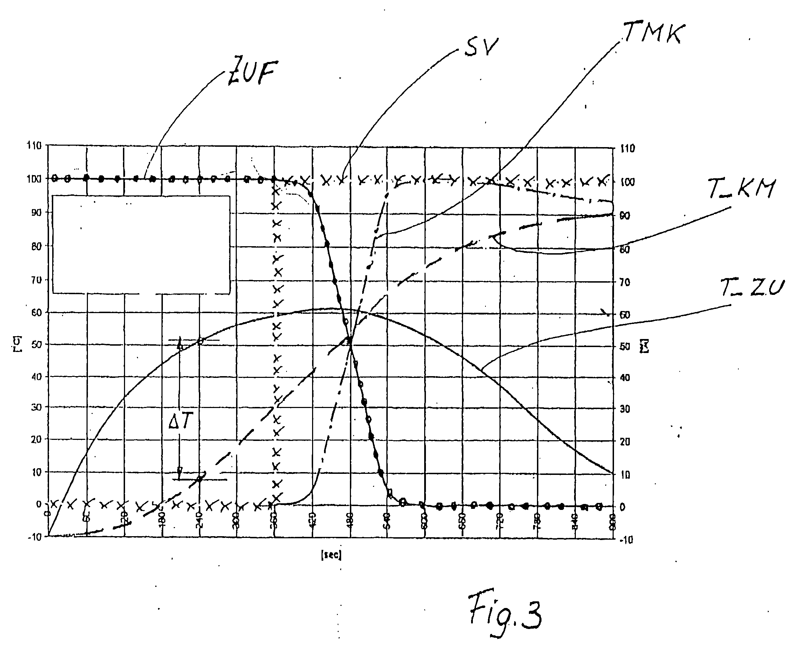

**Fig. 3** zeigt ein Diagramm mit verschiedenen Funktionsabläufen, dargestellt über der Zeit in Sekunden. Die durchgezogene Linie stellt den Verlauf der Zuheiztemperatur T_ZU dar. Die gestrichelt dargestellte Linie zeigt den Verlauf der Kühlmitteltemperatur T_KM, ebenfall über der Zeit. Für beide Kurven gilt die linke Ordinate mit Temperaturskala. Der Öffnungsverlauf der Temperaturmischklappe TMK 7 (Fig. 1) ist strichpunktiert dargestellt, wobei hierfür die rechte Ordinate mit Prozentangaben gilt. 100% bedeutet, dass die Temperaturmischklappe 7 voll geöffnet, d. h. der luftseitige Durchströmungsquerschnitt des Heizkörpers 5 völlig freigegeben ist. 0 % entspricht der Darstellung der Temperaturmischklappe 7 in Fig. 1. Die Zuheizfunktion des Zuheizers 3 (Fig. 1) ist durch eine punktierte Linie ZUF dargestellt, wobei wiederum Prozentangaben auf der rechten Ordinate gelten. 100 % bedeutet hier, dass die Klimaanlage im Wärmepumpenbetrieb mit maximaler Leistung läuft und der Wärmeübertrager 3 als Zuheizer arbeitet. 0 % bedeutet, dass die Zuheizfunktion abgestellt ist. Schließlich ist der Öffnungsverlauf SV des Sommerabsperrventils 11 (Fig. 1) durch Kreuzchen dargestellt.

Im Folgenden wird der Ablauf des Regelverfahrens beschrieben. Ausgegangen wird von einem Kaltstart des Kraftfahrzeuges, also kaltem Motor mit niedriger Kühlmitteltemperatur T_KM und niedriger Zuheiztemperatur T_ZU. Beim Starten des Motors läuft die Klimaanlage im Wärmepumpenbetrieb mit maximaler Heizleistung, d. h. die Zuheizfunktion ZUF ist voll zugeschaltet. Der Wärmeübertrager 3 (Fig. 1) arbeitet als Zuheizer. Zum Startzeitpunkt ist aufgrund der verfahrensbedingten Wirkrichtungsumkehr die Temperaturmischklappe TMK (7) in Kaltposition, das Sommerventil SV (11) ist geschlossen. Bei Prozessstart liegt Temperaturausgleich auf niedrigem Niveau vor, aufgrund der hohen Dynamik des Zuheizers steigt die Zuheiztemperatur T_ZU sehr viel schneller an als die Kühlmitteltemperatur T_KM.

Mit der Zeit erlangt die Brennkraftmaschine ihre Betriebstemperatur, d. h. die Kühlmitteltemperatur T_KM nähert sich der Zuheiztemperatur T_ZU an. Ab einer bestimmten Temperaturdifferenz ΔT = T_ZU - T_KM ist es sinnvoll, die Zuheizfunktion zurückzuregeln und gleichermaßen die normale Heizfunktion aufzusteuem, was in diesem Beispiel zum Zeitpunkt T = 360 Sekunden der Fall ist. Die Warmlaufphase ist in diesem Beispiel nach ca. 720 Sekunden beendet, was sich im Zurückregeln der Temperaturmischklappe T_MK äußert. Die Temperaturverläufe T_ZU und T_KM sowie die Funktionen ZUF, TMK und SV sind beispielhaft über der Zeit aufgetragen; die Funktion bezüglich einer etwa vorhandenen Zusatz-Heizwasserpumpe ist hier nicht dargestellt, der Verlauf entspricht prinzipiell demjenigen des Sommerventils.

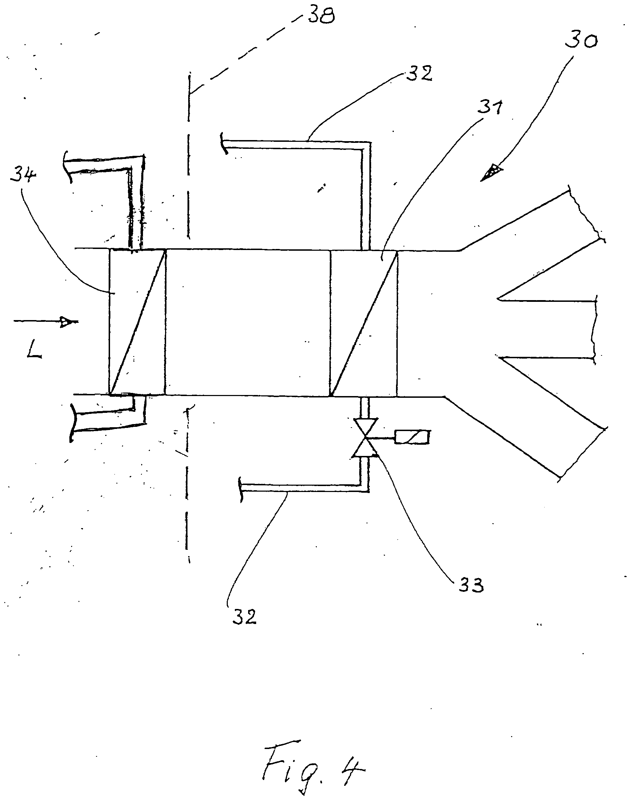

**Fig. 4** zeigt einen Luftkanal 30 einer wassergeregelten, nicht vollständig dargestellten Klimaanlage ― im Gegensatz zu der luftseitig geregelten Klimaanlage gemäß Fig. 1. In dem Luftkanal 30 ist ein Heizkörper 31 angeordnet, welcher den gesamten Querschnitt des Luftkanals 30 ausfüllt und an eine Kühlmittelleitung 32 eines nicht vollständig dargestellten Kühlmittelkreislaufes angeschlossen ist. In der Kühlmittelleitung 32 ist ein als Heizungsventil 33 ausgebildetes Regelorgan angeordnet, welches den Durchfluss des Kühlmittels durch den Heizkörper 31 regelt. Das Regelorgan bzw. Heizungsventil 33 kann als Taktventil oder stetiges Ventil ausgebildet sein. Mit dieser wasserseitigen Durchflussregelung wird die Temperatur der Luft, die den Heizkörper 31 durchströmt, geregelt. Ein Gebläse ist in dieser Darstellung der Einfachheit halber weggelassen. Die Luft durchströmt den Kanal 30 in Richtung des Pfeils L. In Strömungsrichtung oberhalb des Heizkörpers 31 ist analog zu Fig. 1 ein Zuheizer 34 angeordnet, der als Wärmepumpenzuheizer ausgeführt ist. Der Wärmepumpenzuheizer 34 arbeitet im normalen Klimaanlagenmodus (Kühlen) als Verdampfer.

Die Koordination des Überganges von der Zuheizfunktion auf die Standardheizfunktion, also vom Zuheizer 34 auf den Heizkörper 31, erfolgt analog nach demselben Regelverfahren, wie es oben für die luftgeregelte Heizung beschrieben ist - mit dem Unterschied, dass statt der Temperaturmischklappe das Heizungsventil 33 angesteuert wird.

## Patentansprüche

1. Verfahren zur Regelung der Lufttemperatur einer Kraftfahrzeug-Klimaanlage mit Zuheizfunktion, wobei ein Zuheiz-Wärmeübertrager (3) in einem Luftkanal (1) in Luftströmungsrichtung stromaufwärts von einem als Kühlmittel/Luftwärmeübertrager ausgebildeten Heizkörper (5) angeordnet und dem Heizkörper (5) eine Temperaturmischklappe (7) sowie ein Bypasskanal (6) zugeordnet sind, und wobei zu klimatisierende und/oder zu erwärmende Luft mittels eines Gebläses (2) durch den Luftkanal (1) gefördert wird, **dadurch gekennzeichnet, dass** die Position der Temperaturmischklappe (7) in Abhängigkeit von der Zuheizfunktion (ein oder aus) geregelt wird, wobei bei zugeschalteter Zuheizfunktion die Temperaturmischklappe (7) eine Luftströmung durch den Heizkörper (5) unterbindet und bei abgeschalteter Zuheizfunktion freigibt.

2. Verfahren zur Regelung der Lufttemperatur einer Kraftfahrzeug-Klimaanlage mit Zuheizfunktion, wobei ein Zuheiz-Wärmeübertrager (34) in einem Luftkanal (30) in Luftströmungsrichtung stromaufwärts von einem als Kühlmittel/Luftwärmeübertrager ausgebildeten Heizkörper (31) angeordnet und dem Heizkörper (31) ein kühlmittelseitiges Regelorgan (Heizungsventil 33) zugeordnet ist, und wobei zu klimatisierende und/oder zu erwärmende Luft durch den Luftkanal (30) gefördert wird, **dadurch gekennzeichnet, dass** das Heizungsventil (33) in Abhängigkeit von der Zuheizfunktion (ein oder aus) geregelt wird, wobei bei zugeschalteter Zuheizfunktion das Heizungsventil (33) eine Kühlmittelströmung durch den Heizkörper (31) unterbindet und bei abgeschalteter Zuheizfunktion freigibt.

3. Verfahren nach Anspruch 1, **dadurch gekennzeichnet, dass** der Kühlmittelstrom durch den Heizkörper (5) während zugeschalteter Zuheizfunktion unterbunden und bei abgeschalteter Zuheizfunktion zugeschaltet ist.

4. Verfahren nach Anspruch 1, 2 oder 3, **dadurch gekennzeichnet, dass** die Zuheizfunktion solange zugeschaltet bleibt, bis die Kühlmitteltemperatur T_KM die voreilende Zuheiztemperatur T_ZU etwa erreicht hat.

5. Verfahren nach einem der Ansprüche 1 bis 4, **dadurch gekennzeichnet, dass** die voreilende Zuheiztemperatur T_ZU mit der nacheilenden Kühlmitteltemperatur T_KM eine zunächst wachsende und später abnehmende positive Temperaturdifferenz ΔT bildet und dann abgeregelt wird, wenn ΔT gegen Null geht.

6. Vorrichtung zur Durchführung des Verfahrens nach einem der Ansprüche 1 bis 5, **dadurch gekennzeichnet, dass** die Klimaanlage in einem Klimatisierungs- (Kühl-)Betrieb und in einem Wärmepumpen(Heiz-) Betrieb betreibbar ist und einen Verdampfer (3, 34) aufweist, der im Wärmepumpenbetrieb als Zuheiz-Wärmeübertrager (3, 34) fungiert.

7. Vorrichtung zur Durchführung des Verfahrens nach einem der Ansprüche 1 bis 5, **dadurch gekennzeichnet, dass** die Zuheizfunktion als luftseitige Brennstoffheizung ausgebildet ist, welche stromaufwärts vom Heizkörper (31) angeordnet ist.
